(19) Europäisches Patentamt
European Patent Office
Office européen des brevets

(11) **EP 1 295 286 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(21) Anmeldenummer: **01940540.6**

(22) Anmeldetag: **29.05.2001**

(51) Int Cl.:
***G11B 7/135*** (2006.01)    ***G02B 5/18*** (2006.01)

(86) Internationale Anmeldenummer:
**PCT/EP2001/006105**

(87) Internationale Veröffentlichungsnummer:
**WO 2001/093254 (06.12.2001 Gazette 2001/49)**

(54) **GERÄT ZUM LESEN UND/ODER BESCHREIBEN OPTISCHER AUFZEICHNUNGSTRÄGER**

DEVICE FOR READING AND/OR WRITING OPTICAL RECORDING MEDIA

APPAREIL POUR LIRE ET/OU ECRIRE SUR DES SUPPORTS D'ENREGISTREMENT OPTIQUES

(84) Benannte Vertragsstaaten:
**AT BE CH CY DE DK ES FI FR GB GR IE IT LI LU MC NL PT SE TR**

(30) Priorität: **30.05.2000 DE 10026484**

(43) Veröffentlichungstag der Anmeldung:
**26.03.2003 Patentblatt 2003/13**

(73) Patentinhaber: **Thomson Licensing**
**92100 Boulogne-Billancourt (FR)**

(72) Erfinder:
• **DAMBACH, Sören**
**76139 Karlsruhe (DE)**
• **RICHTER, Hartmut**
**78052 Villingen-Schwenningen (DE)**

(74) Vertreter: **Thies, Stephan et al**
**Deutsche Thomson-Brandt GmbH,**
**European Patent Operations,**
**Karl-Wiechert-Allee 74**
**30625 Hannover (DE)**

(56) Entgegenhaltungen:
**EP-A- 0 511 023**        **EP-A- 0 973 160**
**US-A- 6 043 911**

• **PATENT ABSTRACTS OF JAPAN vol. 1998, no. 14, 31. Dezember 1998 (1998-12-31) -& JP 10 261240 A (SONY CORP), 29. September 1998 (1998-09-29) -& US 6 084 843 A 4. Juli 2000 (2000-07-04)**
• **PATENT ABSTRACTS OF JAPAN vol. 1998, no. 14, 31. Dezember 1998 (1998-12-31) -& JP 10 261241 A (SONY CORP), 29. September 1998 (1998-09-29)**
• **PATENT ABSTRACTS OF JAPAN vol. 1999, no. 11, 30. September 1999 (1999-09-30) -& JP 11 149657 A (SONY CORP), 2. Juni 1999 (1999-06-02)**

**Beschreibung**

Die vorliegende Erfindung betrifft ein Gerät zum Lesen und/oder Beschreiben optischer Aufzeichnungsträger, welches Abtaststrahlen unterschiedlicher Wellenlänge verwendet, die entlang einer gemeinsamen optischen Achse verlaufen, den Aufzeichnungsträger abtasten und von einem einzigen Photodetektor detektiert werden. Das Gerät weist insbesondere einen optischen Abtaster zur Wiedergabe bzw. Aufzeichnung von Daten auf optischen Wechselplatten auf.

Optische Abtaster, die zugleich Digital Versatile Disks (DVD) und Compact Disks (CD) wiedergeben bzw. beschreiben können, benötigen zwei verschiedene Laserwellenlängen. Aus diesem Grunde sind CD kompatible DVD-Spieler bzw. -Rekorder mit zwei verschiedenen Laserdioden bestückt. Dieser diskrete Aufbau zieht einen erhöhten ökonomischen Aufwand durch zusätzlich benötigte optische Komponenten nach sich. Als Ansatz zur Reduktion der Anzahl der benötigten Komponenten sind seit kurzer Zeit sogenannte Twin-Laserdioden erhältlich. Es handelt sich dabei um zwei Diodenlaser verschiedener Wellenlänge, die lateral getrennt in einem gemeinsamen Lasergehäuse montiert sind.

Aufgrund der lateralen Trennung der beiden Lichtquellen wird die emittierte Strahlung durch das optische System des Abtasters auf zwei voneinander getrennte Lichtflecke in der informationstragenden Schicht der optischen Disk abgebildet. Dies hat zur Folge, daß in der Ebene des Detektors, in die das von der Disk reflektierte Licht abgebildet wird, wiederum zwei lateral getrennte Foki entstehen. Die angestrebte Verwendung eines gemeinsamen Detektors für beide Wellenlängen wird somit unmöglich.

Aus der US-A-6,043,911 ist ein Gerät bekannt, welches Abtaststrahlen zweier Wellenlängen verwendet, die mittels eines Strahlkombinationselements zur Ausbreitung entlang einer gemeinsamen optischen Achse kombiniert werden.

Nachteilig an diesem bekannten Gerät ist, daß das aus einer Kombination von Prisma und Hologramm bestehende Strahlkombinationselement aufwendig herzustellen ist. Weiterhin ist das Hologramm nicht optimal auf unterschiedliche Eigenschaften der unterschiedliche Wellenlängen erzeugenden Lichtquellen angepaßt, was zu mehr oder minder starken Störeffekten führt.

JP-10-261240 offenbart ein Gerät und ein Verfahren gemäß der Oberbegriffe der Ansprüche 1 und 15.

Eine Aufgabe der vorliegenden Erfindung ist es, ein alternatives verbessertes Gerät vorzuschlagen. Gelöst wird diese Aufgabe durch die in den Ansprüchen angegebenen Maßnahmen.

Erfindungsgemäß ist dabei das Strahlkombinationselement ein Beugungsgitter. Dies hat den Vorteil, daß dessen Eigenschaften berechenbar und somit optimal an die Eigenschaften der Lichtquellen, die insbesondere Laserdioden sind, anpaßbar ist. Die Berechnung der Eigenschaften des Beugungsgitters erfolgt dabei vorzugsweise gemäß einer der im folgenden angegebenen Berechnungsmethoden. Die Informationsschicht ist eine informationstragende Schicht des Aufzeichnungsträgers, der z.B. eine optische Disk, wie CD, DVD, aber auch ein anderer optischer Aufzeichnungsträger sein kann, die entweder nur lesbar, nur beschreibbar oder sowohl lesbar als auch beschreibbar ist.

Das Beugungsgitter weist vorzugsweise Gitterlinien mit Blaze-Profil oder einem Profil auf, welches einem Blaze-Profil ähnlich ist. Bei einem Blaze-Profil hat eine Gitterlinie keinen rechteckigen Querschnitt, sondern einen im wesentlichen schräg verlaufenden Querschnitt. Das Profil ist somit beispielsweise ein sägezahnartiges Profil. Ein Vorteil der Verwendung eines Blaze-Profils liegt darin, daß die Beugungseffizienz optimal genutzt wird, und von jeder der Lichtquellen eine möglichst große Intensität in den kombinierten Strahlgang eingekoppelt wird. Geringstmögliche optische Verluste werden somit erzielt.

Erfindungsgemäß sind die Gitterlinien mit einem Stufenprofil versehen. Vorteil dieses Blaze-ähnlichen Profils ist, daß es ohne großen Aufwand herstellbar ist, dennoch aber nahezu gleich gute Eigenschaften wie ein reines Blaze-Profil aufweist.

Die Gitterlinien des Beugungsgitters sind vorzugsweise gerade und parallel, was den Vorteil einer einfachen Herstellbarkeit hat. In vielen Fällen liefert dies eine ausreichend gute Qualität, insbesondere bei Anordnung des Beugungsgitters im parallelen Strahl. Bei Anordnung des Beugungsgitters im divergenten oder konvergenten Strahl sind die Gitterlinien vorzugsweise gekrümmt ausgelegt. Dies hat den Vorteil, daß durch die damit örtlich unterschiedlichen Abstände der Gitterlinien die örtlich unterschiedlich starken Beugungserfordernisse im nicht parallelen Strahl erfüllt, Aberrationen korrigiert werden.

Vorzugsweise ist auch bei Verwendung gekrümmter Gitterlinien zumindest eine Gitterlinie gerade. Dies hat den Vorteil, daß sich die Bestimmung der Krümmung der Gitterlinien besonders einfach gestaltet, wenn von einer geraden Gitterlinie ausgegangen wird. Vorzugsweise weist diese Gitterlinie zur optischen Achse einen Abstand auf, der dem halben Abstand einer der Lichtquellen zur optischen Achse entspricht.

Erfindungsgemäß ist vorgesehen, daß das Beugungsgitter für beide Wellenlängen auf die jeweilige erste Beugungsordnung optimiert ist. Insbesondere bei Verwendung der Wellenlängenkombination 650 nm, 780 nm ist es in bezug auf Effizienz und Einfachheit der Gitterarchitektur optimal, jeweils die erste Beugungsordnung zu verwenden. Für andere Wellenlängenkombinationen sind auch andere Kombinationen der Beugungsordnungen sinnvoll. Dabei sind sowohl die nullte Ordnung als auch zweite oder höhere Ordnungen mit eingeschlossen.

Im einfachsten Fall sind die Licht unterschiedlicher Wellenlänge erzeugenden Laserdioden so angeordnet, daß die von ihnen erzeugten Abtaststrahlen parallel zueinander und parallel zur optischen Achse verlaufen. Erfindungsgemäß ist vorgesehen, beide Laserdioden bezüglich der optischen Achse gekippt anzuordnen. Dies hat den Vorteil, daß in Kombination mit dem Beugungsgitter ein möglichst achsensymmetrisches Intensitätsprofil erzielt wird.

Vorzugsweise wird dazu auch noch das Beugungsgitter bezüglich der optischen Achse gedreht angeordnet. Besonders vorteilhaft ist es, die Laserdioden und das Beugungsgitter so gedreht anzuordnen, daß eine virtuelle Lichtquelle nullter Ordnung auf der optischen Achse zu liegen kommt.

Erfindungsgemäß ist das Beugungsgitter weiterhin derart orientiert, daß Seitenspots senkrecht zu Informationsspuren des optischen Aufzeichnungsträgers orientiert sind. Seitenspots sind Fokuspunkte von Nebenstrahlen anderer Ordnung als derjenigen, auf die das Beugungsgitter optimiert ist. Diese Beugungsordnungen werden gegebenenfalls absichtlich bei der Bestimmung des Beugungsgitterprofils mit einer geeigneten Intensität eingeplant. Bei der Informationsspur handelt es sich beispielsweise um eine spiralförmig oder kreisförmig angeordneter Spur von länglichen Informationsmarkierungen einer herkömmlichen optischen Disk. Die erfindungsgemäße Ausrichtung des Beugungsgitters hat den Vorteil, daß die Seitenspots zum Detektieren einer möglichen Diskverkippung oder zum Detektieren einer Abweichung des Abtastspots von der Spurmitte mittels bekannter Verfahren nutzbar sind.

Erfindungsgemäß sind die Laserdioden und das Beugungsgitter in einem Modul integriert. Dies hat den Vorteil, daß das Modul als vorproduzierter Teil, das qualitätskontrolliert zum Einbau angeliefert wird, beim Einbau dann eine geringere Anzahl von Montage- und Justageschritten erfordert.

Das Beugungsgitter ist vorteilhafterweise im vom Aufzeichnungsträger kommenden Strahlengang aber noch vor dem Photodetektor angeordnet. Dies hat den Vorteil, daß die Strahlkombination erst im Rückwärtsweg des Abtaststrahls erfolgt. Das Beugungsgitter kann somit einfacher ausgelegt sein, da sich eventuell durch dieses hervorgerufene Fehler im verbleibenden, kurzen Strahlengang kaum noch auswirken.

Vorteilhafterweise werden in diesem Fall auch Beugungsgitter und Detektorelement in einem Modul integriert.

Im Strahlengang ist vorzugsweise ein weiteres Beugungsgitter angeordnet. Dies hat den Vorteil, weitere Nebenstrahlen zu erzeugen, die beispielsweise zur Spurführung genutzt werden. Ist das weitere Beugungsgitter ein Ronchi-Gitter, so hat dies den Vorteil, daß nur für eine der Wellenlängen Nebenstrahlen erzeugt werden. Dies ist insbesondere dann vorteilhaft, wenn ohnehin nur für eine der Wellenlängen weitere Nebenstrahlen, beispielsweise zur Durchführung der bekannten Dreistrahl-Spurführungsmethode, Verwendung finden sollen.

Erfindungsgemäß ist vorgesehen, daß zum Auslesen eines Aufzeichnungsträgers nur jeweils eine der beiden Laserdioden in Betrieb ist, während zum Aufzeichnen von Informationen auf dem Aufzeichnungsträger beide Laserdioden gleichzeitig in Betrieb sind. Durch das erfindungsgemäße Beugungsgitter ist sichergestellt, daß sich die Spots beider Laserdioden auf dem optischen Aufzeichnungsträger überlagern und somit vorteilhaft die zum Aufzeichnen oder Löschen von Daten erforderliche Energie dadurch aufgebracht wird, daß beide Laserdioden gleichzeitig Abtaststrahlen erzeugen. Zum Lesen des Aufzeichnungsträger ist jeweils nur ein Abtaststrahl erforderlich. Vorzugsweise sind zum Schreiben oder Löschen unterschiedliche Wellenlängen vorgesehen, es liegt aber durchaus im Rahmen der Erfindung, hier die gleiche Wellenlänge zu verwenden.

Ein erfindungsgemäßes Verfahren zur Herstellung eines Beugungsgitters, insbesondere zur Verwendung in einem erfindungsgemäßen Gerät wird durch Anspruch 15 definiert.

Weitere vorteilhafte Ausgestaltungen der Erfindung sind in der nachfolgenden Beschreibung von Ausführungsbeispielen enthalten. Dabei zeigen:

Fig. 1:   Strahlengang bei Verwendung zweier Laserdioden;
Fig. 2:   Strahlkombination mittels Wollaston-Prisma;
Fig. 3:   Strahlkombination mittels Beugungsgitter;
Fig. 4:   Linienprofil eines Beugungsgitters;
Fig. 5:   Strahlengang bei Verwendung eines Beugungsgitters;
Fig. 6:   Linienstruktur eines erfindungsgemäßen Beugungsgitters;
Fig. 7:   Strahlengang bei zur optischen Achse versetzt angeordneten Laserdioden;
Fig. 8:   erfindungsgemäßes Gerät mit Beugungsgitter im divergenten Strahl;
Fig. 9:   erfindungsgemäßes Gerät mit Beugungsgitter im parallelen Strahl;
Fig. 10:  erfindungsgemäßes Gerät mit Beugungsgitter im Nachweiszweig;
Fig. 11:  Tabelle berechneter Beugungseffizienz.

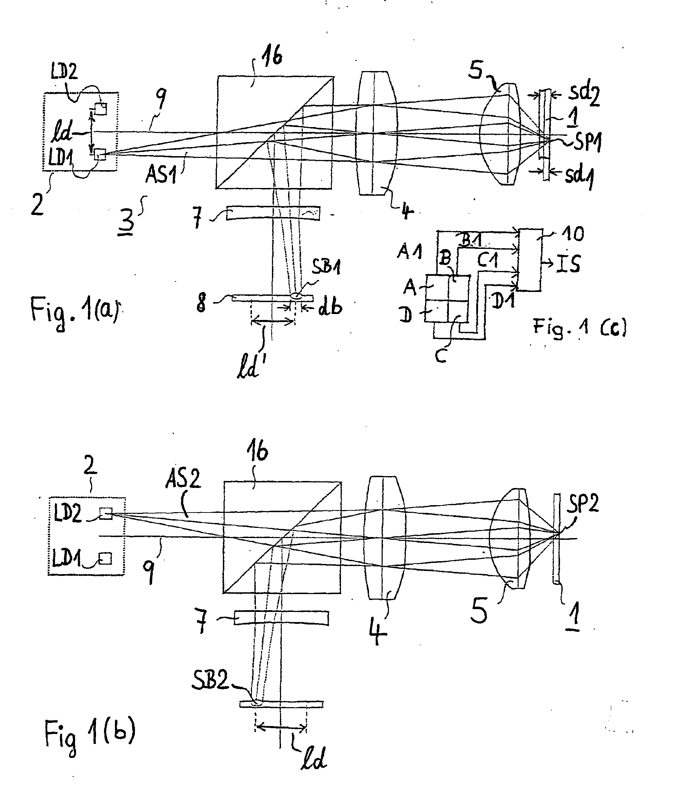

Fig. 1 zeigt den Strahlengang in einem optischen Abtaster 3 eines Geräts zum Lesen und/oder Beschreiben optischer Aufzeichnungsträger 1, welches zwei Laserdioden LD1, LD2 aufweist. Eine sogenannte Twin-Laserdiode oder Dual-Laserdiode besteht aus einer Anordnung von zwei separaten Laserdies LD1, LD2, die in ein gemeinsames Gehäuse 2 integriert sind. Für Anwendungen im Bereich optische Abtaster 3 zum Auslesen bzw. Beschreiben optischer Aufzeichnungsträger 1 emittiert eine erste Laserdiode LD1 bei einer ersten Wellenlänge $\lambda_1$=650nm, eine zweite Laserdiode LD2 bei einer zweiten Wellenlänge $\lambda_2$=780nm. Die Strahlung der zweiten Wellenlänge $\lambda_2$ wird im dargestellten Fall zum Auslesen bzw. Beschreiben des älteren CD-Formates verwendet, während die erste Wellenlänge $\lambda_1$ für die neueren DVD-Formate verwendet wird. Infolge der verschiedenen Anforderungen der unterschiedlichen Diskformate müssen alle Komponenten des Abtasters 3 für beide Wellenlängen $\lambda_1$, $\lambda_2$ optimiert sein. So sollte beispielsweise die Kollimatorlinse 4 eine möglichst geringe Dispersion aufweisen und die Objektivlinse 5 darüberhinaus die sphärische Aberration der für CD und DVD unterschiedlichen Substratdicken $sd_1$, $sd_2$ kompensieren. Der Aufzeichnungsträger 1 ist in Fig. 1 (a) alternativ mit Substratdicke $sd_1$ für DVD und Substratdicke $sd_2$ für CD angedeutet. Die Strahlengänge für die unterschiedlichen Laserdioden LD1, LD2 sind der Übersichtlichkeit wegen in getrennten Abbildungen, Fig. 1(a) und Fig. 1 (b), dargestellt. Bei derartigen Geräten stellt sich folgendes Problem: Im Grunde handelt es sich beim optischen Abtaster 3 um eine beugungsbegrenzte Abbildung der Laserquelle LD1, LD2 auf die optische Speicherplatte 1. Im Fall einer Twin-Laserdiode sind beide Laserquellen LD1, LD2 lateral im Trägergehäuse 2 getrennt. Sie erzeugen zwei Abtaststrahlen AS1, AS2, die entlang der optischen Achse 9 des Abtasters 3 verlaufen. Sie durchlaufen einen Strahlteiler 16 und werden durch das optische System von Kollimatorlinse 4 und Objektivlinse 5 in zwei voneinander getrennte Spots SP1, SP2 auf der informationstragenden Schicht 6 der optischen Platte 1 abgebildet. Diese beiden Spots SP1, SP2 können wiederum als Lichtquellen angesehen werden, die über die Objektivlinse 5 und die Zylinderlinse 7 in die Ebene des Detektors 8 abgebildet werden. Der Detektor 8 ist in Fig. 1c um 90° gekippt dargestellt. Er weist im dargestellten Fall vier Quadranten A, B, C, D auf, die jeweils ein elektrisches Signal A1, B1, C1, D1 abgeben. Diese Signale werden in bekannter, hier nicht näher erläuterten Weise, von einer Auswerteeinheit 10 zu einem oder mehreren Informationssignalen IS umgewandelt. Infolge des durch die Zylinderlinse 7 eingeführten Astigmatismus sind die Bilder SB1, SB2 der beiden Lichtspots SP1, SP2 in der Ebene des Detektors nicht weiter von beugungsbegrenztem Ausmaß, sondern in einer Größe, die entscheidend von der Brennweite der Zylinderlinse 7 abhängt. Die ursprüngliche Trennung der beiden Spots SP1, SP2 ist dadurch in ihren Bildern SB1, SB2 nicht weiter gewährleistet. Die Problematik soll durch ein Zahlenbeispiel verdeutlicht werden: typischerweise sind die beiden Laserquellen LD1, LD2 lateral um etwa ld=0,1mm voneinander getrennt. Dies führt in der Detektorebene zu Bildern SB1, SB2, die ebenfalls etwa 1d'=0,1mm, abhängig von der Brennweite der Zylinderlinse 7, voneinander getrennt sind. Die zylinderlinse 7 selbst wird üblicherweise so gewählt, daß sich ein Durchmesser db eines Bildes SB1, SB2 eines Spots SP1, SP2 auf dem Detektor 8 ebenfalls von etwa db=0,1mm ergibt. In der Paxis sind also zwei gegeneinander verschobene Spotbilder SB1, SB2 mit je vier Quadranten A, B, C, D nachzuweisen, deren Separation ungefähr ihrem Durchmesser db entspricht. Als Lösungsmöglichkeit würde sich ein Detektorpattern anbieten, das aus zwei Photodioden mit jeweils vier Quadranten aufgebaut ist. Diese Lösungsmöglichkeit ist aber in der Praxis nur mit großem Aufwand realisierbar, da bei der Justage der Zylinderlinse 7 der Abstand der beiden Spotbilder SB1, SB2 in der Ebene des Detektors 8 variiert. Der fest durch ein Detektorpattern vorgegebene Bildabstand kann also beim Bau und der Justage eines optischen Abtasters 3 nicht eingehalten werden.

Wünschenswert ist eine optische Anordnung, die die Verwendung eines einzigen, vier Quadranten aufweisenden Detektors 8 ermöglicht. Die beiden Spotbilder SB1, SB2 sollten also auf dieselbe Position in der Detektorebene treffen. Prinzipiell kann zum Erreichen dieses Zieles zwischen zwei verschiedenen Lösungsansätzen unterschieden werden: Zum einen die Erzeugung zweier Spots SP1, SP2 auf der Disk 1, die sich lateral an der gleichen Position befinden. Die Konzentrizität beider Spotbilder SB1, SB2 in der Detektorebene ergibt sich damit in Folge. Zum anderen die Abbildung der auf der Disk 1 lateral getrennten Spots SP1, SP2 auf eine gemeinsame Position in der Detektorebene.

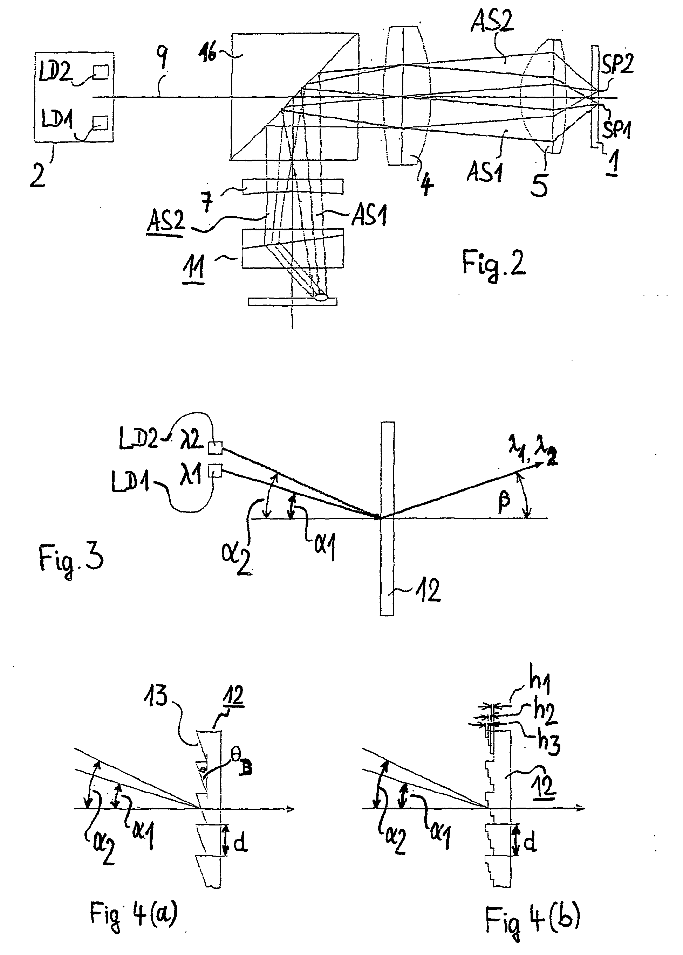

Zu letzterem wird vorgeschlagen, im Detektorpfad die doppelbrechende Eigenschaft eines Wollaston-Prismas 11 auszunutzen. Dies ist in Fig. 2 dargestellt. Zur Vereinfachung sind hier nur die rückwärts von dem Aufzeichnungsträger 1 in Richtung Detektor 8 verlaufenden Abtaststrahlen AS1, AS2 eingezeichnet. Während der Abtaststrahl AS1 der Wellenlänge $\lambda_1$ als ordentlicher Strahl auf das Wollaston-Prisma 11 trifft und dieses ungebrochen wieder verläßt, wird der Abtaststrahl AS2 der Wellenlänge $\lambda_2$ als außerordentlicher Strahl gebrochen. Die Anordnung wird nun so gewählt, daß die Bilder SB1, SB2 beider Wellenlängen $\lambda_1$, $\lambda_2$ in eine gemeinsame laterale Position auf den Detektor 8 treffen. Die Wahl eines Wollaston-Prismas 11 zur Strahlkombination beinhaltet folgende Nachteile: Die Polarisationsvektoren der beiden Wellenlängen müssen senkrecht zueinander stehen. Der Freiheitsgrad einer variablen Orientierung der beiden Laserdies LD1, LD2 ist somit eingeschränkt. Produktionsbedingt werden die beiden Laserdies LD1, LD2 im Gehäuse nahezu nie exakt mit zueinander senkrechter Polarisation ausgerichtet sein. Dies erschwert die Justage erheblich. Die Doppelbrechung des Substrates des Aufzeichnungsträger 1 dreht insbesondere bei Verwendung von bei Schreiblaufwerken üblichen, hier nicht dargestellten Viertel-Wellenlängen-Phasenplatten, die Polariationsrichtung in Abhängigkeit von der Position des optischen Abtasters relativ zum Aufzeichnungsträger 1.

Aus den oben genannten Nachteilen wird klar, daß eine Strahlkombination unter Ausnutzung der polarisationsabhängigen Eigenschaften von Materialien nicht wünschenswert ist. Eine erfindungsgemäße Methode, die eine polarisationsunabhängige Strahlkombination nach beiden oben genannten Lösungsansätzen ermöglicht, ist im folgenden beschrieben.

Bei dem in Fig. 3 dargestellten Grundprinzip der Erfindung wird im inversen Sinn die dispersive Eigenschaft eines Beugungsgitters 12 ausgenutzt. Während bei einem Gitterspektrometer die unter einem festen Eintrittswinkel $\alpha$ auf das Gitter treffende polychrome Strahlung dieses gemäß der Gittergleichung

$$n*\lambda = d*(\sin(\alpha) - \sin(\beta)) \tag{1}$$

unter verschiedenen Winkeln $\beta$ in der n-ten Beugungsordnung wieder verläßt, trifft hier die Strahlung der unterschiedlichen Wellenlängen $\lambda_1$ und $\lambda_2$ unter den Winkeln $\alpha_1$ und $\alpha_2$ auf das Beugungsgitter 12. Die Gitterperiode d ist so gewählt, daß sich nach der Gittergleichung identische Austrittswinkel $\beta_1$ und $\beta_2$ ergeben. Für $\beta_1 = \beta_2 = 0$ gilt

$$n_1 * \frac{\lambda_1}{d} - \sin(\alpha_1) = 0 \quad ; \quad n_2 * \frac{\lambda_2}{d} - \sin(\alpha_2) = 0 \,, \tag{2}$$

wobei $n_1$ und $n_2$ die zur Strahlkombination verwendeten Beugungsordnungen beschreiben. Sie sind ab initio zunächst unabhängig voneinander wählbar. Beispielsweise kann $n_1 = 0$ und $n_2 = 1$ gewählt werden, womit sich mit $\alpha_1 = 0$ die benötigte Gitterperiode zu

$$d = \frac{1}{\lambda_2 + \sin(\alpha_2)} \tag{3}$$

bestimmen läßt. Entsprechende Lösungen von Gleichung (2) ergeben sich für andere Kombinationen der Beugungsordnungen $n_1$ und $n_2$. Die von den beiden Laserdioden emittierte Strahlung der Wellenlängen $\lambda_1$ und $\lambda_2$ trifft auf das Beugungsgitter unter den Winkeln $\alpha_1$ und $\alpha_2$ bezüglich der Flächennormalen. Die Abbildung zeigt den Austrittswinkel $\beta$, der erfindungsgemäß für beide Wellenlängen gleich gewählt ist.

Fig. 4 zeigt eine erfindungsgemäße Optimierung des Linienprofils des Beugungsgitters 12. In Fig. 4(a) ist dazu ein Blaze-Profil verwendet, in Fig. 4(b) ein Stufenprofil als Approximation des Blaze-Profils. Das Stufenprofil ist hier dargestellt mit 4 Höhenstufen. Die äquidistanten Stufen $h_1$, $h_2$, $h_3$ sind so gewählt, daß sie im Mittel dem Blazewinkel $\theta_B$ der Fig. 4(a) entsprechen.

Die geeignete Wahl der Beugungsordnungen $n_1$ und $n_2$ wird erfindungsgemäß durch die zusätzliche Betrachtung der Beugungseffizienz $\varepsilon$ getroffen. Die Beugungseffizienz $\varepsilon$ bestimmt, welcher Anteil von dem emittierten Laserlicht der Wellenlängen $\lambda_1$, $\lambda_2$ für das optische System des Abtasters 3 zur Verfügung steht. Prinzipiell hängt die Beugungseffizienz $\varepsilon$ neben der Wahl der Beugungsordnung $n_1$, $n_2$ entscheidend vom Strukturfaktor des Beugungsgitters 12 ab, das heißt, vom Profil der einzelnen Gitterlinien 13. Beispiele eines derartigen Profils der Gitterlinien 13 sind in Fig. 4 dargestellt. Das in Abb. 4(a) dargestellte asymmetrisch geformte Blaze-Profil eignet sich erfindungsgemäß besonders dazu, einen möglichst großen Anteil der gebeugten Strahlung in nur einer Beugungsordnung n zu konzentrieren. Wird für ein solches Beugungsgitter 12, dessen Substrat durch den Brechungsindex $n_r$ charakterisiert wird, die Blaze-Bedingung

$$2\pi * \frac{x}{d} = \frac{2\pi}{n*\lambda} * (n_r - 1) * h(x) \;\rightarrow\; h(x) = \frac{n*\lambda}{d} * \frac{x}{n_r - 1} \tag{4}$$

exakt eingehalten, dann erhält man eine Beugungseffizienz von $\varepsilon = 1$ für die entsprechende Ordnung n und $\varepsilon = 0$ für alle andere Ordnungen. Allerdings wird aus Fig. 4(a) und Gleichung (4) deutlich, daß die Blaze-Bedingung nicht für beide Wellenlängen $\lambda_1$ und $\lambda_2$ simultan erfüllt werden kann. Für die Beugungseffizienz $\varepsilon$ gilt

$$\varepsilon(n) = \left| \alpha(n) \right|^2 \,, \tag{5}$$

wobei $\alpha(n)$ die komplexe Amplituden-Beugungseffizienz beschreibt. Die Größe $\alpha(n)$ kann für nicht allzu kleine Gitterperioden durch

$$a(n) = \frac{1}{d}\int_0^d \exp(i\phi(x)) * \exp\left(-i2\pi n\frac{x}{d}\right)dx \qquad (6)$$

berechnet werden, wobei $\Phi(x)$ die relative Phase eines an der Stelle x auf die Gitterstufe treffenden Strahles beschreibt. Für ein Blazegitter gilt

$$\phi(x) = 2\pi\frac{n_r - 1}{n * \lambda}h(x) \; , \qquad (7)$$

wobei h(x) das Höhenprofil einer Gitterlinie 13 darstellt. Der Zusammenhang mit dem in Fig. 4(a) eingezeichneten BlazeWinkel ist durch

$$h(x) = \tan(\theta_B) * x \quad \text{für} \quad x \in [0, d] \qquad (8)$$

gegeben

Ist das Gitterprofil für die Wellenlänge $\lambda_1$ in der Beugungsordnung $n_1$ optimiert, ergibt sich für die Wellenlänge $\lambda_2$ in der Ordnung $n_2$

$$\varepsilon(n_2) = \frac{2 - 2 * \cos\left(2\pi * \left(n_1 * \frac{\lambda_1}{\lambda_2} - n_2\right)\right)}{(2\pi)^2 * \left(n_1 * \frac{\lambda_1}{\lambda_2} - n_2\right)^2} \qquad (9)$$

unter der Annahme, daß die Dispersion des Gittersubtrates, d.h. die Änderung von $n_r$ mit der Wellenlänge, vernachlässigbar ist.

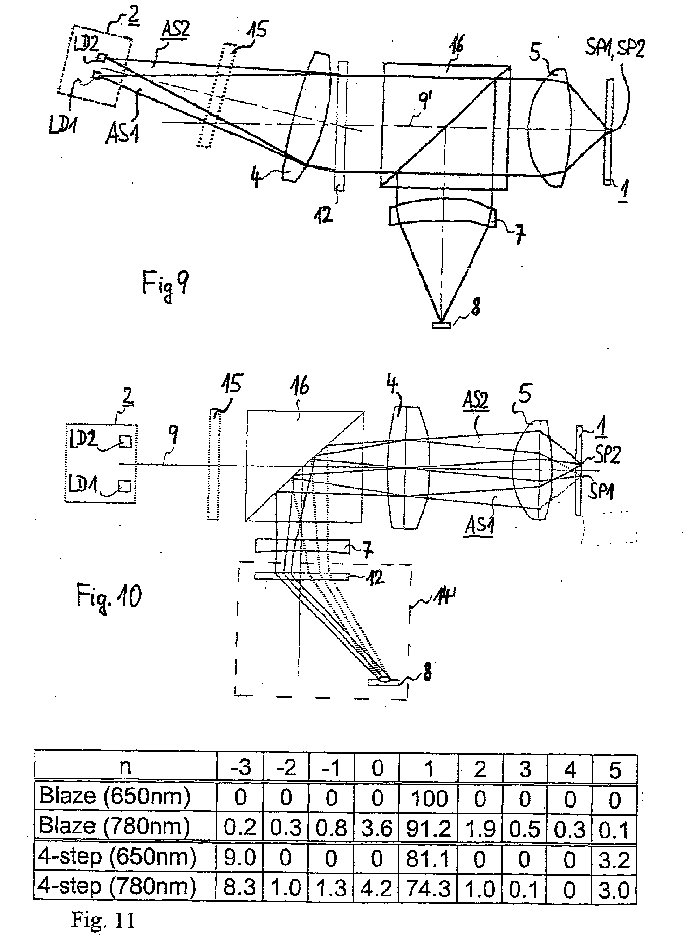

Es wurde gefunden, daß zum Erreichen einer maximalen Lichtausbeute für beide Wellenlängen bei einem gegebenen Verhältnis $\lambda_1/\lambda_2=0.833$ eine Wahl der Beugungsordnungen zu $n_1=n_2=\pm 1$ besonders vorteilhaft ist. Als Beispiel ist in Fig. 11 die Beugungseffizienz $\varepsilon$ für die verschiedenen Beugungsordnungen n angegeben, wobei ein Gitterprofil angenommen wurde, mit dem in der ersten Ordnung für die Wellenlänge $\lambda_1=650$nm exakt die Blazebedingung erfüllt ist. Entsprechend ist diese für die Wellenlänge $\lambda_2=780$nm verletzt.

Aufgrund der relativ geringen Differenz der Wellenlängen $\lambda_1$, $\lambda_2$ zeigt sich aber, daß auch für $\lambda_2$ eine Beugungseffizienz $\varepsilon$ von mehr als 90% erreichbar ist. Zusätzlich sind in Fig. 11 die Beugungseffizienzen aufgelistet, die sich mit dem in Fig. 4(b) skizzierten, aus vier diskreten Stufen aufgebauten Gitterprofil, hier als 4-Step bezeichnet, ergeben. Ein solches Profil läßt sich durch lithographische Belichtung und anschließende Ätzprozesse einfacher herstellen als das mechanisch zu fertigende ideale Blaze-Profil. Die Stufenhöhen $h_1$, $h_2$, $h_3$ und die Anzahl der Stufen werden dabei so gewählt, daß sich eine bestmögliche Approximation an das optimierte Blaze-Profil ergibt. Die in Fig. 11 für dieses Profil angegebenen Beugungseffizienzen wurden durch numerische Auswertung von Gleichung (5) bestimmt. Auch hier wurde gefunden, daß für beide Wellenlängen $\lambda_1$, $\lambda_2$ eine Ausbeute von mehr als 70% erreichbar ist.

Im folgenden werden konkrete Anordnungen in optischen Abtastern zur Strahlkombination beschrieben, insbesondere für Beugungsordnungen $n_1=n_2=\pm 1$.

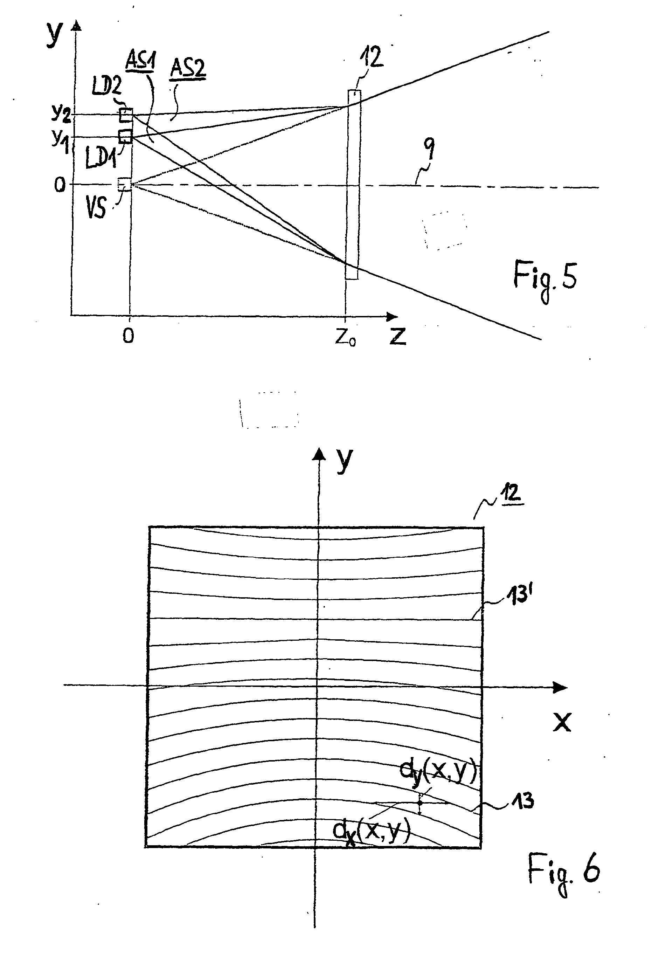

Fig. 5 zeigt den Strahlengang eines erfindungsgemäßen Geräts bei Strahlkombination im divergenten Abtaststrahl AS1, AS2. Die divergent aus den beiden Laserdioden LD1 und LD2 emittierte Strahlung weist nach der Beugung am Beugungsgitter 12 keine Aberrationen auf und propagiert derart als entstünde sie für beide Wellenlängen am gleichen Ort, der virtuellen Quelle VS. Die beiden Laserdioden LD1 und LD2 werden dabei als Punktlichtquellen angesehen. Nach der Beugung am Beugungsgitter 12 breitet sich die Strahlung beider Lichtquellen LD1, LD2 so aus, als entstünde sie in einer einzigen Quelle, der sogenannten virtuellen Quelle VS. Bezüglich der virtuellen Quelle VS befinden sich die beiden realen Quellen LD1, LD2 bei den lateralen Koordinatenpunkten $(0, y_1)$ bzw. $(0, y_2)$. Das Beugungsgitter 12 befindet sich in einem longitudinalen Abstand $Z_0$. Die zentral auf das Beugungsgitter 12, d.h. auf die Koordinate $(Z_0, 0)$

treffenden Strahlen verlaufen nach der Beugung entlang der optischen Achse 9, der Austrittswinkel β ist für beide Strahlen AS1, AS2 null. Die Eintrittswinkel $\alpha_1$ und $\alpha_2$ lassen sich einerseits aus der Geometrie der Anordnung zu

$$y_1 = Z_0 * \tan(\alpha_1); \quad y_2 = Z_0 * \tan(\alpha_2) \tag{10}$$

bestimmen. Andererseits müssen sie die Gittergleichung (1) für β=0 erfüllen, sodaß sich als Bedingung

$$\Delta y = y_2 - y_1 = Z_o * \left( \tan\left( \arcsin \frac{\lambda_2}{d} \right) - \tan\left( \arcsin \frac{\lambda_1}{d} \right) \right) \approx \frac{Z_0}{d}(\lambda_2 - \lambda_1) \tag{11}$$

ergibt, wobei der letzte Schritt in Gleichung (11) nur im Grenzfall $\lambda_{1,2} << d$ gilt. Anhand Gleichung (11) lassen sich bei gegebenem Abstand $\Delta y$ von Laserdiode LD1 und Laserdiode LD2 die zur Rekombination benötigte Gitterkonstante d und die Position $y_1$ bestimmen. Zum Beispiel erhält man für $Z_0$=10mm und $\Delta y$=0,1mm eine Gitterkonstante d=13$\mu$m und eine Position $y_1$=0,5mm.

Wird ein einfaches lineares Beugungsgitter 12 mit einer Periode gemäß Gleichung (11) verwendet, ist die Kombination beider Abtaststrahlen AS1, AS2 gewährleistet, es ergibt sich aber kein beugungsbegrenzter Spot SP1, SP2 auf der informationstragenden Schicht 6 des Aufzeichnungsträgers 1. Ursache dafür sind Aberrationen, die bei der Beugung des divergenten Strahles AS1, AS2 am linearen Gitter entstehen. Um dies zu verhindern, wird das Beugungsgitter 12 erfindungsgemäß weitaus komplexer als ein einfaches Beugungsgitter strukturiert.

Fig. 6 zeigt die Linienstruktur eines optimierten Beugungsgitters 12 mit gekrümmten Gitterlinien 13. Man erkennt, daß eine Gitterlinie 13' nicht gekrümmt ist. Der Linienabstand d ist hier kartesisch als Funktion der Koordiante (x,y) durch $d_x(x,y)$ und $d_y(x,y)$ beschrieben.

Die korrekte Struktur des Beugungsgitters 12 wird, wie im folgenden beschrieben, für die Strahlung aus der Laserdiode LD1 ermittelt. Eine perfekte Korrektur aller Aberrationen ist nur für die Wellenlänge $\lambda_1$, $\lambda_2$ einer der beiden Laserdioden LD1, LD2 möglich. Die endlichen Aberrationen der Strahlung aus der Laserdiode LD2 sind - wie numerische Simulationsrechnungen zeigen - vernachlässigbar.

Jeder Strahl, der aus der Laserdiode LD1, d.h. aus dem Punkt (0, $y_1$) stammt und am Punkt ($x_a$, $y_a$) auf das Beugungsgitter 12 trifft, soll derart gebeugt werden, daß der resultierende Strahl demjenigen entspricht, der in der virtuellen Quelle VS am Punkt (0,0) entsteht und ungebeugt durch den Punkt ($x_a$,$y_a$) tritt. Dies bedeutet, daß die Austrittsrichtung des gebeugten Strahles gleich der Einfallsrichtung des virtuellen Strahls ist. Um die Beugung an gekrümmten Gitterstrichen 13 korrekt beschreiben zu können, wird die Gitterperiode, wie in Fig. 6 dargestellt, in die kartesischen Komponenten $d_x$ und $d_y$ für jede Gitterkoordinate (x,y) zerlegt. Entsprechend wird der Eintrittswinkel $\alpha$ in seine Komponenten $\alpha_x$ und $\alpha_y$ aufgeteilt. Es folgt so für einen Strahl von (0,$y_1$) nach ($x_a$,$y_a$) im Abstand $Z_0$:

$$\alpha_x(x_a, y_a) = \arctan\left( \frac{x_a}{\sqrt{Z_0^2 + (y_a - y_1)^2}} \right) \tag{12}$$

$$\alpha_y(x_a, y_a) = \arctan\left( \frac{y_a - y_1}{\sqrt{Z_0^2 + x_a^2}} \right)$$

Der virtuelle Strahl aus der virtuellen Quelle VS bestimmt den ebenfalls in Komponenten dargestellten Soll-Austrittswinkel β. Dieser ist gleich dem Eintrittswinkel des virtuellen Strahles. Es folgt

$$\beta_x(x_a, y_a) = \arctan\left( \frac{x_a}{\sqrt{Z_0^2 + y_a^2}} \right) \tag{13}$$

$$\beta_y(x_a, y_a) = \arctan\left(\frac{y_a}{\sqrt{Z_0^2 + x_a^2}}\right)$$

Die Gitterperioden $d_x(x_a,y_a)$ und $d_y(x_a,y_a)$ werden so gewählt, daß die Gittergleichung (1) mit den oben berechneten Winkeln $\alpha_x$, $\alpha_y$, $\beta_x$, $\beta_y$ an jeder Stelle $(x_a, y_a)$ für die erste Beugungsordnung erfüllt ist. Es ergibt sich damit

$$d_x(x_a, y_a) = \frac{\lambda_1}{\sin\left(\arctan\left(\frac{y_a - y_1}{\sqrt{Z_0^2 + x_a^2}}\right)\right) - \sin\left(\arctan\left(\frac{y_a}{\sqrt{Z_0^2 + x_a^2}}\right)\right)} \qquad (14)$$

$$d_x(x_a, y_a = \frac{\lambda_1}{\sin\left(\arctan\left(\frac{x_a}{\sqrt{Z_0^2 + (y_a - y_1)^2}}\right)\right) - \sin\left(\arctan\left(\frac{x_a}{\sqrt{Z_0^2 + y_a^2}}\right)\right)}$$

Durch Gleichung 14 ist das Beugungsgitter 12 vollständig charakterisiert und kann in einzelne Gitterlinien 13 unterteilt werden. Als günstiger Ausgangspunkt zur Linienkonstruktion eignet sich erfindungsgemäß die Gitterlinie 13' bei $y_a = y_1/2$. Hier weist der Nenner von $d_x$ eine Singularität auf, was bedeutet, daß die Gitterlinie 13' parallel zur x-Achse verläuft. Der Verlauf aller weiteren Gitterlinien 13 läßt sich durch sukzessive Addition von $d_y$ berechnen. Die in Fig. 6 dargestellte Struktur des Beugungsgitters 12 entspricht qualitativ der auf diese Weise berechneten Struktur.

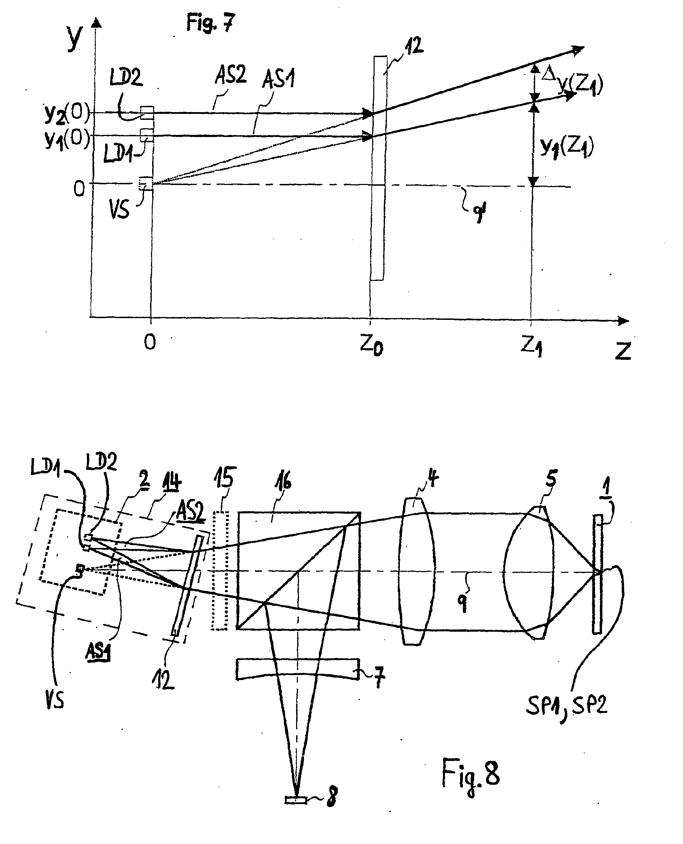

Fig. 7 zeigt den Strahlengang bei zur optischen Achse 9 versetzt angeordneten Laserdioden LD1, LD2. Die fett eingezeichneten Pfeile geben dabei die Emissionswinkel der Intensitätsmaxima an. Die beiden Laserdioden LD1 und LD2 sind üblicherweise so angeordnet, daß die Winkelverteilung des Intensitätsprofiles parallel zur Z-Achse ausgerichtet ist. Der laterale Abstand $\Delta y(Z_1)$ der Intensitätsmaxima hängt vom Abstand $y_2(0)-y_1(0)$ der Laserdioden LD1, LD2 und der Laufstrecke $Z_1-Z_0$ ab.

In der bisherigen Beschreibung ist die Emissionscharakteristik der Laserdioden nicht weiter beachtet. Die Laserdioden LD1 und LD2 wurden als Punktlichtquellen ohne eine spezifische Winkelverteilung der Strahlung angenommen..In Fig. 7 ist dargestellt, in welche Richtung sich schließlich die Intensitätsmaxima bewegen, bzw. wie ihr lateraler Abstand $\Delta y(Z_1)$ in longitudinaler Richtung zunimmt. So folgt für diesen Abstand

$$\Delta y(Z_1) = \frac{y_2(0) - y_1(0)}{Z_0} * Z_1 \qquad (15)$$

Sollte sich bei $Z_1$ eine Kollimatorlinse 4 befinden, dann bleibt der Abstand $\Delta y(Z_1)$ für $Z > Z_1$ konstant. Als Zahlenbeispiel soll wieder $y_2 - y_1 = 0,1$mm, $Z_0 = 10$ mm und $Z_1 = 20$ mm angenommen werden. Es ergibt sich so eine Separation der Emissionsmaxima von 0,2mm. Dieser Wert ist klein gegen den typischen Aperturdurchmesser einer Objektivlinse 5 von etwa 3-4mm. Das bedeutet, daß sich in der Praxis die Separation der Intensitätsmaxima kaum bemerkbar macht. Kritischer ist dagegen die Verschiebung der Emissionsmaxima gegenüber der eingezeichneten Achse 9'. Diese Verschiebung $y_1(Z_1)$ wird in etwa den fünffachen Wert von $\Delta y(Z_1)$ annehmen. Dies bedeutet für das obige Zahlenbeispiel eine Verschiebung des Intensitätsmaximums um etwa 1mm gegenüber der optischen Achse 9'. Diese Verschiebung beträgt somit etwa ¼ der Linsenapertur und sollte korrigiert werden. Dies erfolgt erfindungsgemäß wie folgt: Die aus dem Beugungsgitter 12 austretenden Wellenfronten entsprechen Kugelwellen, die von einem Emissionspunkt der virtuellen Quelle VS ausgehen. Es ist also möglich, das nachfolgende optische System in beliebigen Winkeln um den Punkt VS zu drehen, ohne die bisherigen Schritte zur Bestimmung des Beugungsgitters 12 hinfällig werden zu lassen. Es tritt also auch ohne Änderung der Eigenschaften des Beugungsgitters 12 keine Änderung der Eigenschaften der kombinierten Strahlen AS1, AS2 auf. Die auszuführende Drehung erfolgt vorzugsweise in einem solchen Winkel, daß das Intensitätsmaximum von Laserdiode LD1 auf der optischen Achse 9 des nachfolgenden Systems liegt. Ein entsprechend optimiertes Gesamtsystem ist in Fig. 8 dargestellt.

Fig. 8 zeigt den Gesamtaufbau des optischen Abtasters 8 mit Beugungsgitter 12 im divergenten Strahl. Um die Verschiebung der Intensitätsmaxima beider Laserdioden LD1, LD2 gegen die optische Achse 9 des auf das Beugungsgitters 12 folgenden optischen Systems so gering wie möglich zu halten, ist die Einheit der Laserdioden LD1, LD2 und Beugungsgitter 12 um eine senkrecht zur Zeichenebene stehende, durch die virtuelle Quelle VS laufende Achse gedreht. Der optimale Drehwinkel ist der Mittelwert der Abstrahlwinkel beider Laserdioden LD1, LD2 nach Durchlaufen des Beugungsgitters 12.

Erfindungsgemäß ist bei Verwendung eines entsprechend kleinen Abstandes $Z_0$ ein Modul 14 als integrierte Gesamtkomponente bestehend aus Twin-Laserdiode LD1, LD2 und Beugungsgitter 12 vorgesehen. Die Orientierung des optischen Systems relativ zum Beugungsgitter 12 ist so gewählt, daß die restlichen Beugungsordnungen des Beugungsgitters 12 senkrecht zu den Spuren der optischen Platte 1 orientierte Lichtspots ergeben. Diese Seitenspots dienen bei Verwendung zusätzlicher, hier nicht dargestellter Detektorelemente zum Nachweis einer radialen Verkippung der optischen Disk. Als Option ist ein weiteres Gitter 14 eingezeichnet. Es dient dem Nachweis eines Spurfehlers bei der Wiedergabe einer CD-Disk gemäß der bekannten Dreistrahl-Spurführungsmethode. Seine Gitterlinien sind dazu ungefähr senkrecht zu denen des Beugungsgitters 12 orientiert, sodaß die sich auf der Disk 1 ergebenden Seitenspots des weiteren Gitters 15 längs der Spuren ausgerichtet sind. Da das weitere Gitter 15 für das Auslesen von DVD-Platten nicht benötigt wird, ist vorgesehen, ein solches Gitter zu verwenden, bei dem für die Wellenlänge $\lambda_1$ keine Beugung auftritt. Dies ist beispielsweise für ein Ronchi-Gitter mit $\Delta\Phi=\Pi$ für 650nm der Fall.

Einfacher als im zuvor beschriebenen Fall gestaltet sich die Strahlkombination im kollimierten Strahl. Hierbei wird, wie in Fig. 9 dargestellt, die divergent aus den Laserdioden LD1 und LD2 austretende Strahlung AS1, AS2 zunächst durch eine entsprechende Kollimatorlinse 4 kollimiert. Aufgrund der unterschiedlichen Objektpositionen der Laserdioden LD1 und LD2 weist der kollimierte Strahl beider Wellenlängen $\lambda_1$, $\lambda_2$ unterschiedliche Feldwinkel auf. Diese werden durch das erfindungsgemäße Beugungsgitter 12, das sich im kollimierten Strahl befindet, aneinander angeglichen. Durch die Beugung eines kollimierten Strahles an einem linearen Gitter entstehen keine Aberrationen, das Beugungsgitter 12 ist vorteilhaft als einfaches Beugungsgitter ausgelegt. Um für beide Wellenlängen $\lambda_1$, $\lambda_2$ eine maximale Photonenausbeute zu erreichen, werden, wie zuvor beschrieben, beide Laserfelder in jeweils erster Ordnung gebeugt. Zur Auslegung der Gitterperiode wird die Differenz der Feldwinkel $\Delta\alpha=\alpha_2-\alpha_1$ der kollimierten Strahlen berücksichtigt. Für diese gilt

$$2 * \tan\left(\frac{\Delta\alpha}{2}\right) = \frac{\Delta y}{f_{koll}} \quad \rightarrow \quad \Delta\alpha = 2 * \arctan\left(\frac{\Delta y}{2 * f_{koll}}\right) \quad\quad (16)$$

wobei $f_{koll}$ die Brennweite der Kollimatorlinse 4 beschreibt. Mit der Bedingung $\beta=0$ wird Gleichung (2) zur eindeutigen Bestimmung von Gitterperiode d und Eintrittswinkel $\alpha_1$ verwendet:

$$d = \frac{\lambda_1}{\sin(\alpha_1)} = \frac{\lambda_2}{\sin(\alpha_1 + \Delta\alpha)} \quad\quad (17)$$

Zahlenbeispiel: Für eine Kollimatorbrennweite $f_{koll}$=20mm und einem lateralen Abstand $\Delta y$=0,1mm ergibt sich $\Delta\alpha$=0,286°. Mit Gleichung (17) lassen sich Winkel und Gitterperiode zu $\alpha_1$=1,43° bzw. d=26µm bestimmen.

Fig. 10 zeigt die Strahlkombination im Rückwärtspfad eines erfindungsgemäßen Geräts. Das Beugungsgitter 12 ist dabei im Nachweiszweig des optischen Abtasters 8 angeordnet. Die Anordnung entspricht der in Fig. 2 dargestellten, wobei anstelle des Wollaston-Prismas 11 ein erfindungsgemäßes Beugungsgitter 12 zur Strahlkombination verwendet wird.

Dabei wird die von den beiden Laserdioden LD1 und LD2 emittierte Strahlung zunächst nicht kombiniert, so daß sich, wie zu Fig. 1 gezeigt, zwei lateral getrennte Spots SP1, SP2, auf der Informationsschicht 6 der optischen Disk 1 ergeben. Die Randbedingung, daß beide Spots SP1, SP2 auf die gleiche Position SB1, SB2 in der Detektorebene abgebildet werden, wird hierbei durch das Beugungsgitter 12 im Rückwärtspfad erfüllt. Die Struktur des Beugungsgitters 12 kann dabei, auch wenn es sich im nicht-parallelen Strahlengang befindet, durch ein einfaches lineares Gitter realisiert werden. Die durch die Beugung am linearen Gitter entstehenden Aberrationen sind an dieser Stelle, im Gegensatz zu dem zu den Fig. 5-8 beschriebenen Aufbau, vernachlässigbar. Das Beugungsgitter 12 wird aus Gründen der Photonenausbeute wieder für beide Wellenlängen $\lambda_1$, $\lambda_2$ in erster Beugungsordnung verwendet. Ein Modul 14', welches Beugungsgitter 12 und Detektor 8 beinhaltet, ist als Alternative gestrichelt dargestellt.

Zusätzliche Anwendungsmöglichkeiten der Erfindung sind im folgenden angegeben. Durch die ersten beiden Möglichkeiten zur Strahlkombination werden auf der optischen Disk 1 zwei sich überlappende Lichtflecke SB1, SB2 erzeugt. Während der normale Betrieb eines optischen Abtasters 8 die sukzessive Verwendung der beiden Wellenlängen $\lambda_1$, $\lambda_2$ vorsieht, d.h. die Laserdiode LD1 mit Wellenlänge $\lambda$=650nm für DVD, die Laserdiode LD2 $\lambda$=780nm für CD, werden durch die erfindungsgemäße Methode neuartige Anwendungen der optischen Datenspeicherung erschlossen. Dazu gehören beipielsweise die sogenannten Zwei-Photonen-Prozesse. Bei diesen Prozessen wird eine Speicherschicht 6 auf der Disk 1 verwendet, die zum Einschreiben einer Informationseinheit molekulare elektronische Übergänge ausnutzt. Dabei erfolgt der molekulare Übergang von einem Zustand ZA nach einem anderen Zustand ZB über ein Zwischenniveau ZC. Für die Anregung des Überganges ZA→ZC wird beispielsweise Licht der Laserdiode LD1 verwendet, während der Übergang ZC→ZB durch die Strahlung der Laserdiode LD2 angeregt wird. Das Auslesen der eingeschriebenen Information erfolgt dagegen nur mit einer der beiden Laserdioden LD1, LD2. Durch Verwendung solcher Zwei-Photonen-Prozesse kann zukünftig eine höhere Datensicherheit erzielt werden. Als weitere neuartige Anwendung der überlappenden Spots SP1, SP2 sind sogenannte "pre-heat"-Prozesse vorgesehen. Dabei sorgt beipielsweise das Licht der Laserdiode LD2 für ein großflächiges Anwärmen der Speicherschichten 6 der optischen Disk, während erst durch entsprechende Pulse der Laserdiode LD1 die Information auf die Speicherschicht 6 eingeschrieben wird. Vorteile gegenüber den heutigen Verfahren liegen hierbei ebenfalls in einer höheren Datensicherheit gegenüber Löschprozessen und in den höheren erreichbaren Leistungsdichten. Höhere Leistungsdichten sind beispielsweise bei optischen Speicherplatten 1 mit mehreren informationstragenden Schichten 6 gewünscht.

Die Erfindung bezieht sich auf ein diffraktives Verfahren zur Formung der von beiden Laserdioden LD1, LD2 emittierten Strahlung, sodaß die Verwendung eines einzelnen Detektors 8 möglich ist. Es wird einerseits ein Weg zum Erzielen zweier kollinear angeordneter Foki SP1, SP2 auf der optischen Platte 1 aufgezeigt, sodaß ein einzelner Detektor 8 verwendet werden kann. Andererseits wird ein Weg zur Abbildung der auf der optischen Platte 1 getrennten Lichtflecke SP1, SP2 auf einen gemeinsamen Detektor 8 beschrieben. Nachteile bei der Verwendung eines Wollaston-Prismas 11 sind: Die Polarisation der Laserdioden LD1, LD2 kann nicht frei gewählt werden. Sie ist nicht im Vorwärtszweig verwendbar, es treten lateral getrennte Spots SP1, SP2 auf der Disk 1 auf. Wollaston-Prismen 11 sind vergleichsweise teuere optische Komponenten, da sie nicht aus Kunststoff gefertigt werden können. Durch die Verwendung des Beugungsgitters 12 läßt sich erfindungsgemäß die Strahlung, die aus zwei lateral getrennten monochromatischen Lichtquellen, hier Laserdioden LD1, LD2 emittiert wird, derart formen, daß die Lichtkegel beider Wellenlängen $\lambda_1$, $\lambda_2$ nach Durchlaufen des Beugungsgitters 12 eine gemeinsame Achse 9 aufweisen. Damit läßt sich ein einfaches Konzept für einen optischen Abtaster 8 zur Wiedergabe bzw. Aufzeichnung von DVD's und CD's realisieren. Es wird zur Kombination der Strahlung die dispersive Eigenschaft der Beugung am Gitter ausgenutzt, wobei für beide Wellenlängen $\lambda_1$, $\lambda_2$, die erste Beugungsordnung n=±1 verwendet wird. Für die Verwendung im Vorwärtspfad des Abtasters 8 wird eine komplexe Linienstruktur zur Korrektur von Aberrationen beschrieben. Um eine für beide Wellenlängen $\lambda_1$, $\lambda_2$ möglichst hohe Beugungseffizienz, d.h. geringe Lichtverluste zu erzielen, wird für die Stufenform des Beugungsgitters 12 eine diskretisierte Blazegeometrie verwendet. Es werden als weitere mögliche Anwendungen des Verfahrens "pre-heat recording" und Zwei-Photonen-Prozesse aufgezeigt.

## Patentansprüche

1. Gerät zum Lesen und/oder Beschreiben optischer Aufzeichnungsträger (1) mit einer ersten Laserdiode ($L_{D1}$) zum Erzeugen eines ersten Abtaststrahls (AS1) einer ersten Wellenlänge ($\lambda_1$) und einer zweiten Laserdiode (LD2) zum Erzeugen eines zweiten Abtaststrahls (AS2) einer zweiten Wellenlänge ($\lambda_2$), wobei die Abstaststrahlen (AS1, AS2) entlang einer gemeinsamen optischen Achse (9) verlaufen, eine Informationsschicht (6) des Aufzeichnungsträgers (1) abtasten und auf einen einzigen Photodetektor (8) zum Erzeugen eines Informationssignals (IS) fallen, wobei an einer Stelle der optischen Achse (9) ein Strahlkombinationselement angeordnet ist, **dadurch gekennzeichnet, daß** das Strahlkombinationselement ein Beugungsgitter (12) ist, das für beide Wellenlängen ($\lambda_1$, $\lambda_2$) auf eine höhere als die nullte Beugungsordnung optimiert ist.

2. Gerät nach Anspruch 1, **dadurch gekennzeichnet, daß** das Beugungsgitter (12) Gitterlinien (13) mit Blaze-Profil oder einem diesem ähnlichen Profil aufweist.

3. Gerät nach Anspruch 2, **dadurch gekennzeichnet, daß** Gitterlinien (13) mit Stufenprofil ($h_1$, $h_2$, $h_3$) vorhanden sind.

4. Gerät nach einem der Ansprüche 1 bis 3, **dadurch gekennzeichnet, daß** das Beugungsgitter (12) gekrümmte Gitterlinien (13) aufweist.

5. Gerät nach Anspruch 4, **dadurch gekennzeichnet, daß** eine Gitterlinie (13') gerade ist.

**6.** Gerät nach einem der vorhergehenden Ansprüche, **dadurch gekennzeichnet, daß** das Beugungsgitter (12) für beide Wellenlängen ($\lambda_1$, $\lambda_2$) auf die erste Beugungsordnung optimiert ist.

**7.** Gerät nach einem der vorhergehenden Ansprüche, **dadurch gekennzeichnet, daß** erste Laserdiode (LD1) und zweite Laserdiode (LD2) bezüglich der optischen Achse (9) gekippt angeordnet sind.

**8.** Gerät nach einem der vorhergehenden Ansprüche, **dadurch gekennzeichnet, daß** das Beugungsgitter (12) bezüglich der optischen Achse (9) gekippt angeordnet ist.

**9.** Gerät nach einem der vorhergehenden Ansprüche, **dadurch gekennzeichnet, daß** das Beugungsgitter (12) derart orientiert ist, daß Seitenspots senkrecht zu Informationsspuren des optischen Aufzeichnungsträgers (1) orientiert sind.

**10.** Gerät nach einem der vorhergehenden Ansprüche, **dadurch gekennzeichnet, daß** erste Laserdiode (LD1), zweite Laserdiode (LD2) und Beugungsgitter (12) in einem Modul (14) integriert sind.

**11.** Gerät gemäß einem der Ansprüche 1 bis 6, **dadurch gekennzeichnet, daß** das Beugungsgitter (12) im vom Aufzeichnungsträger (1) kommenden Strahlengang vor dem Photodetektor (8) angeordnet ist.

**12.** Gerät gemäß Anspruch 11, **dadurch gekennzeichnet, daß** Beugungsgitter (12) und Photodetektor (8) in einem Modul (14') integriert sind.

**13.** Gerät gemäß einem der vorhergehenden Ansprüche, **dadurch gekennzeichnet, daß** im Strahlengang ein weiteres Beugungsgitter (15), insbesondere ein Ronchi-Gitter, angeordnet ist.

**14.** Gerät nach einem der vorhergehenden Ansprüche, **dadurch gekennzeichnet, daß** beide Laserdioden (LD1, LD2) zum Aufzeichnen von Informationen auf dem optischen Aufzeichnungsträger (1) gleichzeitig in Betrieb sind, während zum Auslesen nur jeweils eine der Laserdioden (LD1, LD2) in Betrieb ist.

**15.** Verfahren zur Herstellung eines Beugungsgitters (12), insbesondere zur Verwendung in einem Gerät gemäß einem der vorhergehenden Ansprüche, wobei die Gitterstruktur und das Gitterlinienprofil ($h_1$, $h_2$, $h_3$) bestimmt werden, das entsprechende Höhenprofil in Flächen gleicher Höhe aufgeteilt wird, und die Flächen gleicher Höhe mittels Lithographie und Ätzprozeß auf einen Rohling übertragen werden, **dadurch gekennzeichnet, daß** die Gitterstruktur derart berechnet wird, daß divergente Strahlen einer ersten Wellenlänge ($\lambda_1$) und einer zweiten Wellenlänge ($\lambda_2$), die in einer höheren als der nullten Beugungsordnung auf das Gitter (12) treffen, vom Gitter (12) derart gebeugt werden, daß sie im wesentlichen Strahlen aus einer virtuellen Quelle (VS) entsprechen, die in nullter Ordnung ungebeugt durch das Gitter (12) treten.

**Claims**

**1.** Appliance for reading from and/or writing to optical recording media (1) having a first laser diode (LD1) for producing a first scanning beam (AS1) at a first wavelength ($\lambda_1$), and having a second laser diode (LD2) for producing a second scanning beam (AS2) at a second wavelength ($\lambda_2$), with the scanning beams (AS1, AS2) running along a common optical axis (9), scanning an information layer (6) on the recording medium (1) and falling on a single photodetector (8) in order to produce an information signal (IS) with a beam combination element being arranged at a point on the optical axis (9), **characterized in that** the beam combination element is a diffraction grating (12), which is optimized for both wavelengths ($\lambda_1$, $\lambda_2$) to a diffraction order higher than zero.

**2.** Appliance according to Claim 1, **characterized in that** the diffraction grating (12) has grating lines (13) with a Blaze profile, or with a profile which is similar to this.

**3.** Appliance according to Claim 2, **characterized in that** the grating lines (13) have a stepped profile ($h_1$, $h_2$, $h_3$).

**4.** Appliance according to one of Claims 1 to 3, **characterized in that** the diffraction grating (12) has curved grating lines (13).

**5.** Appliance according to Claim 4, **characterized in that** one grating line (13') is straight.

6. Appliance according to one of the preceding claims, **characterized in that** the diffraction grating (12) is optimized to the first diffraction order for both wavelengths ($\lambda_1$, $\lambda_2$).

7. Appliance according to one of the preceding claims, **characterized in that** the first laser diode (LD1) and the second laser diode (LD2) are arranged tilted with respect to the optical axis (9).

8. Appliance according to one of the preceding claims, **characterized in that** the diffraction grating (12) is arranged tilted with respect to the optical axis (9).

9. Appliance according to one of the preceding claims, **characterized in that** the diffraction grating (12) is oriented in such a way that side spots are oriented at right angles to information tracks on the optical recording medium (1).

10. Appliance according to one of the preceding claims, **characterized in that** the first laser diode (LD1), the second laser diode (LD2) and the diffraction grating (12) are integrated in one module (14).

11. Appliance according to one of Claims 1 to 6, **characterized in that** the diffraction grating (12) is arranged upstream of the photodetector (8) in the beam path coming from the recording medium (1).

12. Appliance according to Claim 11, **characterized in that** the diffraction grating (12) and the photodetector (8) are integrated in one module (14').

13. Appliance according to one of the preceding claims, **characterized in that** a further diffraction grating (15), in particular a Ronchi grating, is arranged in the beam path.

14. Appliance according to one of the preceding claims, **characterized in that** both laser diodes (LD1, LD2) are in operation simultaneously in order to record information on the optical recording medium (1), while only one of the laser diodes (LD1, LD2) is in each case in operation for reading.

15. Method for producing a diffraction grating (12) in particular for use in an appliance according to one of the preceding claims, with the grating structure and the grating line profile ($h_1$, $h_2$, $h_3$) being defined, with the corresponding height profile being subdivided into areas of equal height, and the areas of equal height being transferred onto a blank by means of lithography and an etching process, **characterized in that** the grating structure is calculated in such a way that divergent beams at a first wavelength ($\lambda_1$) and at a second wavelength ($\lambda_2$), which strike the grating (12) in a diffraction order higher than zero are diffracted by the grating (12) in such a way that they essentially correspond to beams from a virtual source (VS) which pass through the grating (12) in the zero order without being diffracted.

**Revendications**

1. Appareil pour lire et/ou écrire sur des supports d'enregistrement optiques (1) possédant une première diode laser (LD1) pour générer un premier faisceau de balayage (AS1) d'une première longueur d'onde ($\lambda_1$) et une deuxième diode laser (LD2) pour générer un deuxième faisceau de balayage (AS2) d'une deuxième longueur d'onde ($\lambda_2$), dans lequel les faisceaux de balayage (AS1, AS2) passent le long d'un axe commun (9), balayent une couche d'informations (6) du support d'enregistrement (1) et arrivent sur un photodétecteur (8) pour générer un signal d'information (IS), où un élément de combinaison des faisceaux est disposé à un point de l'axe optique (9), **caractérisé en ce que** l'élément de combinaison des faisceaux est un réseau de diffraction (12) qui est optimisé sur un ordre de diffraction supérieur à l'ordre zéro pour les deux longueurs d'ondes ($\lambda_1$, $\lambda_2$).

2. Appareil selon la revendication 1, **caractérisé en ce que** le réseau de diffraction (12) comporte des lignes (13) ayant un profil blaze ou un profil analogue.

3. Appareil selon la revendication 2, **caractérisé en ce que** des lignes du réseau (13) ayant un profil à échelons ($h_1$, $h_2$, $h_3$) existent.

4. Appareil selon une des revendication 1 à 3, **caractérisé en ce que** le réseau de diffraction (12) comporte des lignes du réseau (13) incurvées.

5. Appareil selon la revendication 4, **caractérisé en ce qu'**une ligne du réseau (13') est droite.

**6.** Appareil selon une des revendications précédentes, **caractérisé en ce que** le réseau de diffraction (12) est optimisé sur l'ordre de diffraction un pour les deux longueurs d'ondes ($\lambda_1$, $\lambda_2$).

**7.** Appareil selon une des revendications précédentes, **caractérisé en ce que** la première diode laser (LD1) et la deuxième diode laser (LD2) sont inclinées par rapport à l'axe optique (9).

**8.** Appareil selon une des revendications précédentes, **caractérisé en ce que** le réseau de diffraction (12) est incliné par rapport à l'axe optique (9).

**9.** Appareil selon une des revendications précédentes, **caractérisé en ce que** le réseau de diffraction (12) est orienté de façon à ce que les faisceaux latéraux soient perpendiculaires aux pistes d'informations du support d'enregistrement optique (1).

**10.** Appareil selon une des revendications précédentes, **caractérisé en ce que** la première diode laser (LD1), la deuxième diode laser (LD2) et le réseau de diffraction (12) sont intégrés dans un module (14).

**11.** Appareil selon une des revendications 1 à 6, **caractérisé en ce que** le réseau de diffraction (12) est placé sur la future trajectoire du faisceau du support d'enregistrement (1) avant le photodétecteur (8).

**12.** Appareil selon la revendication 11, **caractérisé en ce que** le réseau de diffraction (12) et le photodétecteur (8) sont intégrés dans un module (14'),

**13.** Appareil selon une des revendications précédentes **caractérisé en ce qu'**un autre réseau de diffraction (15), notamment un réseau Ronchi, est placé sur la trajectoire du faisceau.

**14.** Appareil selon une des revendications précédentes, **caractérisé en ce que** les deux diodes laser (LD1, LD2) fonctionnent simultanément pour enregistrer des informations sur le support d'enregistrement optique (1), alors qu'une seule des diodes laser (LD1, LD2) respectives fonctionne pour la lecture.

**15.** Procédé de fabrication d'un réseau de diffraction (12), destiné notamment à une utilisation dans un appareil conforme à l'une des revendications précédentes, dans lequel la structure du réseau et le profil des lignes du réseau ($h_1$, $h_2$, $h_3$) sont déterminés, le profil vertical correspondant est divisé en surfaces de même hauteur, et les surfaces de même hauteur sont transférées sur un disque cédérom vierge par lithographie et un processus de gravure, **caractérisé en ce que** le réseau de diffraction est calculé de façon à permettre la diffraction des faisceaux divergents d'une première longueur d'onde ($\lambda_1$) et d'une deuxième longueur d'onde ($\lambda_2$), qui rencontrent le réseau (12) dans un ordre de diffraction supérieur à zéro, qui sont diffractés par le réseau (12) de sorte qu'ils correspondent en grande partie à des faisceaux provenant d'une source virtuelle (VS), qui passent par le réseau (12) sans être déviés dans l'ordre zéro.

Fig. 1(a)

Fig 1(b)

Fig. 1 (c)

Fig.2

Fig.3

Fig 4 (a)

Fig 4 (b)

Fig. 5

Fig. 6

Fig. 7

Fig. 8

17

Fig 9

Fig. 10

| n | -3 | -2 | -1 | 0 | 1 | 2 | 3 | 4 | 5 |
|---|---|---|---|---|---|---|---|---|---|
| Blaze (650nm) | 0 | 0 | 0 | 0 | 100 | 0 | 0 | 0 | 0 |
| Blaze (780nm) | 0.2 | 0.3 | 0.8 | 3.6 | 91.2 | 1.9 | 0.5 | 0.3 | 0.1 |
| 4-step (650nm) | 9.0 | 0 | 0 | 0 | 81.1 | 0 | 0 | 0 | 3.2 |
| 4-step (780nm) | 8.3 | 1.0 | 1.3 | 4.2 | 74.3 | 1.0 | 0.1 | 0 | 3.0 |

Fig. 11